# FASCICULE DE BREVET EUROPEEN

(11) **EP 1 836 533 B1**
(45) Date de publication et mention de la délivrance du brevet: **11.05.2011**
(21) Numéro de dépôt: 05848344.7
(22) Date de dépôt: 14.12.2005
(51) Int. Cl.: G03B 21/58

(54) **ÉCRAN DE PROJECTION PLIABLE CONSTITUÉ D' UNE TOILE DE PROJECTION RÉFLECTIVE PLIÉE DANS UN COFFRET DERRIÈRE UN DECOR MURAL**
ZUSAMMENKLAPPBARER PROJEKTIONSSCHIRM, BESTEHEND AUS EINEM IN EINER BOX HINTER EINER WANDDEKORATION ZURÜCKGEZOGENEN REFLEKTIERENDEN STOFF
COLLAPSING PROJECTION SCREEN CONSISTING OF A REFLECTING FABRIC RETRACTED IN A BOX BEHIND A WALL DECORATION

(30) Priorité: 17.12.2004 FR 0413490
(43) Date de publication de la demande: 26.09.2007
(73) Titulaire: D.S.H.D. (Design Screen Haute Definition), 37380 Monnaie (FR)
(72) Inventeur: SUTEAU, Eric, Claude, F-37380 Monnaie (FR)
(74) Mandataire: Corret, Hélène
(86) Numéro de dépôt international: PCT/FR2005/003129
(87) Numéro de publication internationale: WO 2006/067304

(56) Documents cités:
- EP-A- 0 742 475
- US-A- 2 827 955
- US-A1- 2003 123 032
- US-B1- 6 466 369
- PATENT ABSTRACTS OF JAPAN vol. 1998, no. 01, 30 janvier 1998 (1998-01-30) -& JP 09 230503 A (TOPPAN PRINTING CO LTD), 5 septembre 1997 (1997-09-05)
- PATENT ABSTRACTS OF JAPAN vol. 1998, no. 01, 30 janvier 1998 (1998-01-30) -& JP 09 230504 A (TOPPAN PRINTING CO LTD), 5 septembre 1997 (1997-09-05)

## Description

La présente invention concerne un dispositif de pliage d'une toile de projection réflective et d'intégration de celle-ci au dos d'un décor mural, et plus précisément un dispositif permettant de plier/déplier une toile de projection de « home-cinéma » en trois parties pour réduire son encombrement sans formation de marque persistante de pliure sur celle-ci.

L'usage de vidéo-projecteurs conçus spécialement pour les applications « home-cinéma » (anglicisme pouvant être traduit par l'expression « cinéma à la maison ») se développe chez les particuliers, mais ces vidéo-projecteurs nécessitent une toile de projection réflective, adaptée à la projection de face, dite projection frontale. La toile de projection doit ainsi être non translucide, sans le moindre pli, et la plus tendue possible, ce qui rend impossible à ce jour de plier une telle toile réflective opaque sans lui occasionner de plis qui nuisent à la qualité d'image frontale projetée par ces vidéo-projecteurs.

Les toiles de projection frontale pour vidéo-projecteurs sont soit enroulées sur leur plus grande longueur au sein de carters à déroulement motorisé ou manuel, soit tendues sur un cadre fixe, d'une longueur égale à celle de la base de l'écran. Cela engendre un encombrement horizontal très important sur le mur des particuliers sur lesquels ces toiles sont installées.

Certaines toiles de projection sont améliorées par un dispositif de tension visant à rendre ces toiles plus planes lors de leur utilisation. Mais ce dispositif augmente encore l'encombrement horizontal de ces écrans et accroît au contraire la difficulté qu'il y a à les intégrer discrètement sur le mur des particuliers.

Certains dispositifs permettent de plier un écran de rétro-projection pour le rendre mobile et l'installer rapidement devant un auditoire professionnel ou scolaire, mais ces dispositifs ne concernent que des écrans translucides pour projection par l'arrière, et non des toiles réflectives pour projection frontale. Ce type de dispositifs n'existe ainsi que pour un public professionnel ou scolaire et ne concerne donc pas la cible des particuliers souhaitant s'équiper d'un home-cinéma privé à base de vidéo-projecteur.

D'autres dispositifs permettent de plier un support ou les pieds d'un écran, mais pas la toile réflective pour projection frontale elle-même.

Encore d'autres dispositifs permettent de replier un écran translucide dans un coffret à poser sur un support horizontal lors d'utilisations professionnelles ou scolaires itinérantes, mais aucun dispositif ne permet d'intégrer et replier une toile réflective derrière un décor mural à destination des particuliers, sans occasionner de dommage irréversibles à cette toile.

Il est connu des documents de brevets suivants un état actuel de la technique illustrant de tels dispositifs :
- EP-A2-085 527, se rapportant à la construction d'un écran de projection ;
- EP-A1-631 174, décrivant un écran géant à charnière pour présentation plein air ;
- WO 97/09853, concernant des écrans de présentation munis de haut-parleurs ;
- EP-A1-1 233 300, relatif à écran de projection avec support,
- WO 03/100519, se rapportant à un écran autonome à dépliage manuel,
- US 6 466 369, concernant à un dispositif de visualisation portative à écran repliable, et
- WO 20/04027515, décrivant un écran mural enroulable/déroulable.

JP 09 230 504 A divulgue un coffret avec deux portes à l'intérieur duquel se trouve une toile de projection réflective, fixée exclusivement au voisinage des parties extrêmes des portes ouvertes, de sorte que ladite toile se déploie et se tend à l'ouverture des deux portes et se referme dans le coffret à la fermeture des deux portes.

Le dispositif selon l'invention permet de remédier à ces inconvénients. Il comporte en effet un cadre ou tout autre ornement mural de même type, tel que, sans que cela ne soit limitatif, sous-verre, tableau, miroir, pêle-mêle aimanté pour photos, écran d'affichage derrière lequel un coffret est fixé.

Plus précisément, la présente invention a pour objet un dispositif de pliage d'une toile de projection réflective, le dispositif comprenant à cet effet un décor mural derrière lequel est disposé un coffret à l'intérieur duquel s'ouvre un dispositif en trois parties tel un triptyque comprenant un premier volet, un second volet et un double fond central s'avançant dans l'alignement desdits volets ouverts et/ou reculant au fond dudit coffret, une toile de projection réflective étant tendue sur les volets et le double fond de sorte que ladite toile se déploie et se tend à l'ouverture des deux volets, et se referme sur elle-même en trois parties, sans pliure, à la fermeture des deux volets.

Ainsi, lorsque l'utilisateur ouvre les deux volets du coffret, le double fond central s'avance jusqu'à ce que le volet droit, le volet gauche et le double fond central soient parfaitement alignés dans un même plan, tel un triptyque. La toile réflective de projection est tendue sur le triptyque et se retrouve ainsi dépliée sur toute sa longueur.

Lorsque l'utilisateur referme les deux volets du coffret, le double fond central recule au fond du coffret en éloignant la partie centrale de la toile de projection des deux volets qui peuvent donc être refermés sur l'espace libéré. La toile de projection réflective est ainsi repliée sur elle-même au sein du coffret, en trois parties espacées les unes devant les autres, sans aucune marque ou trace de pliure, et son encombrement est ainsi réduit.

Selon des modes de réalisation particuliers de la présente invention :
- le coffret possède un premier côté sur lequel est fixé le premier volet, et un second côté sur lequel est fixé le second volet, le premier côté étant plus profond que le second côté ;
- le second volet est moins large que le premier volet de façon à pouvoir rentrer à l'intérieur du coffret une fois fermé.

Ainsi, le coffret fermé est de dimensions telles que les deux volets, i.e. des volets de droite et de gauche, ne se referment pas dans un même plan mais l'un devant l'autre en laissant un espace libre entre eux. Ceci est rendu possible grâce au côté droit du coffret plus profond que le côté gauche, ou inversement, et au volet gauche moins large que le volet droit, et inversement.

Selon d'autres caractéristiques particulièrement avantageuses de la présente invention :
- le premier volet et le second volet sont reliés au coffret par des charnières disposées de sorte que lesdits volets ne se referment pas sur le même plan mais l'un devant l'autre, et en laissant un espace libre entre eux ;
- le dispositif comprend en outre des moyens pour faciliter l'ouverture et/ou la fermeture de l'un au moins des volets ;
- les moyens pour faciliter l'ouverture et/ou la fermeture des volets comprennent un bras articulé reliant chacun des volets au coffret ;
- les volets et le double fond sont chacun munis de moyens de rattrapage de leur alignement afin de tendre la toile de projection réflective de manière parfaitement plane sur lesdits volets et ledit double fond lorsque le dispositif est en position totalement ouverte ;
- les moyens de rattrapage d'alignement comprennent des baguettes d'épaisseurs variables disposés sur le périmètre respectif de chaque volet et/ou dudit double fond ;
- les volets et le double fond central, ou leurs baguettes de rattrapage d'alignement, sont munis de points d'accroche pour tendre la toile de projection frontale ;
- le dispositif comprend en outre un système de rappel élastique de sorte que le double fond central, sur lequel est tendu le centre de la toile de projection réflective, avance automatiquement à l'ouverture des volets et recule à leur fermeture, un espace libre étant prévu entre le double fond central et le second volet placé devant lui ;
- le système de rappel élastique est constitué par une pluralité de ressorts reliant le double fond central au coffret ;
- un système d'attache relie les volets au double fond de manière à déplacer automatiquement le double fond en fonction de l'ouverture et la fermeture des volets ;
- le système d'attache comprend un câble ou bien une fine tôle souple élastique, laquelle forme alors également les moyens de rappel élastique du double fond ;
- le double fond central est muni de roulettes pour faciliter son avance et son recul à l'intérieur du coffret à l'ouverture et la fermeture des volets ;
- le dispositif comprend également un système d'accroche pour bloquer chaque volet en position ouverte et/ou fermée ;
- le système d'accroche comprend un aimant équipant un bord de chaque volet et des bords correspondants du coffret ;
- le premier volet est muni d'un premier rebord de sorte que le périmètre de l'ensemble du coffret est parfaitement clos quand le dispositif est fermé ;
- le second volet est également muni d'un rebord sensiblement identique au rebord du premier volet ;
- le dispositif comprend en outre un système de tension élastique fixé à la toile de projection réflective, de sorte que ladite toile est tendue localement au sein du coffret sur chaque volet et sur le double fond central ;
- le dispositif comprend également des caches fixés à l'extrémité intérieure de chaque volet et juxtaposés sur les rebords et des volets de sorte que ces caches masquent le dispositif de tension de la toile de projection réflective lorsque le dispositif est ouvert ;
- les angles intérieurs des volets sont chanfreinés et recouverts d'un système de protection, par exemple en tissu, de manière à protéger la toile de projection réflective de toute usure, notamment par frottement ;
- le dispositif comprend en outre un bandeau périmétrique de couleur contrastée avec celle de la toile de projection, ledit bandeau étant fixé sur le recto de la toile réflective de façon à renforcer localement la structure de la toile, à accentuer le contraste de l'image projetée sur la toile et à dissimuler des portions du dispositif de tension ;
- un élément d'ornement comprenant l'un au moins parmi un cadre, un sous-verre, un tableau, un miroir ou un pêle-mêle aimanté, est fixé sur ou constitue la face avant du premier volet de sorte que ce dispositif d'ornement constitue, ou est supporté par, la façade décorative de l'ensemble du dispositif en position fermé ;
- l'arrière du coffret est muni d'un système d'accroche permettant de le suspendre à un mur tel un tableau mural ;
- le coffret est muni, à sa base, d'un système de piètements amovibles permettant de poser l'ensemble du dispositif sur une table ou un support horizontal ;
- le coffret est muni d'un axe rotatif arrière placé sensiblement en son centre permettant de suspendre ledit dispositif à un mur et de le placer en position horizontale, en position verticale, ou dans toute position intermédiaire inclinée par rotation du coffret autour dudit axe.

D'autres caractéristiques, détails et avantages de l'invention ressortiront à la lecture de la description qui suit, faite en référence aux dessins annexés donnés à titre d'exemple et qui représentent respectivement :
- la figure 1, une vue de dessus en coupe représentant de manière simplifiée un dispositif conforme à la présente invention en position fermée,
- la figure 2, une vue de dessus en coupe représentant le dispositif de la figure 1 en position semi ouverte,
- la figure 3, une vue de dessus en coupe représentant le dispositif de la figure 1 en position totalement ouverte,
- la figure 4, une vue de dessus en coupe représentant un agrandissement du dispositif en position fermée,

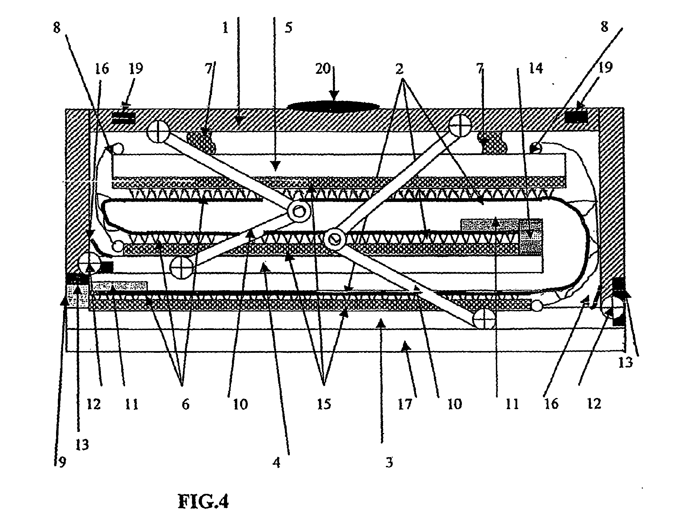

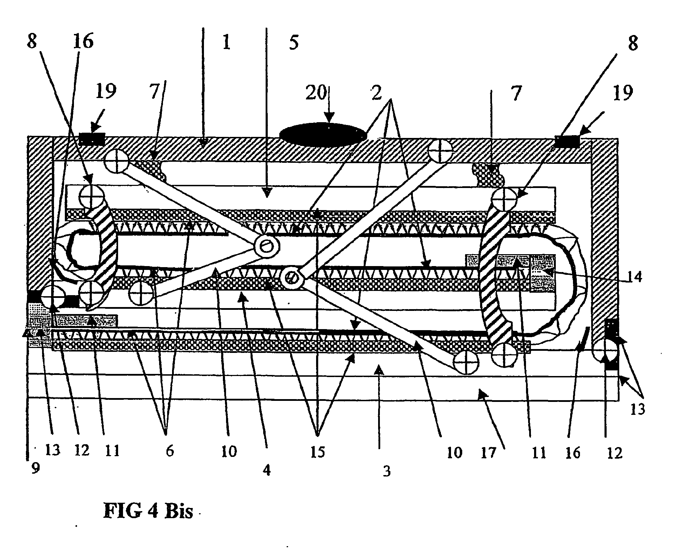

- la figure 4bis, une vue de dessus en coupe représentant un agrandissement d'une variante du dispositif en position fermée,

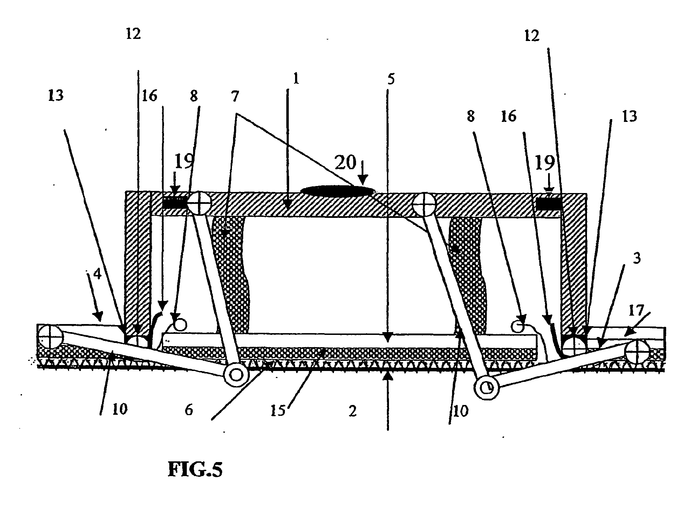

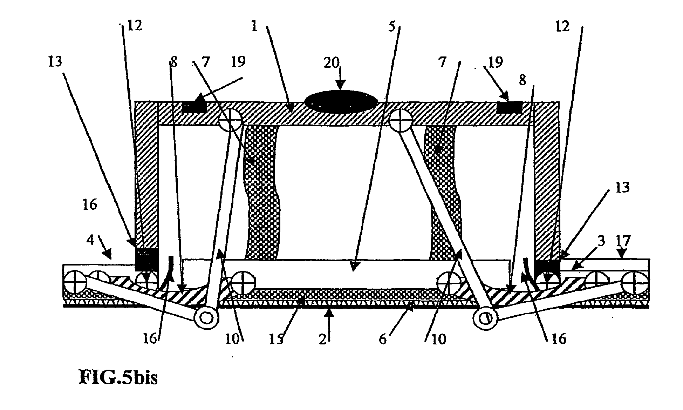

- la figure 5, une vue de dessus en coupe représentant un agrandissement du dispositif en position ouverte,
- la figure 5bis, une vue de dessus en coupe représentant un agrandissement d'une variante du dispositif en position ouverte, et

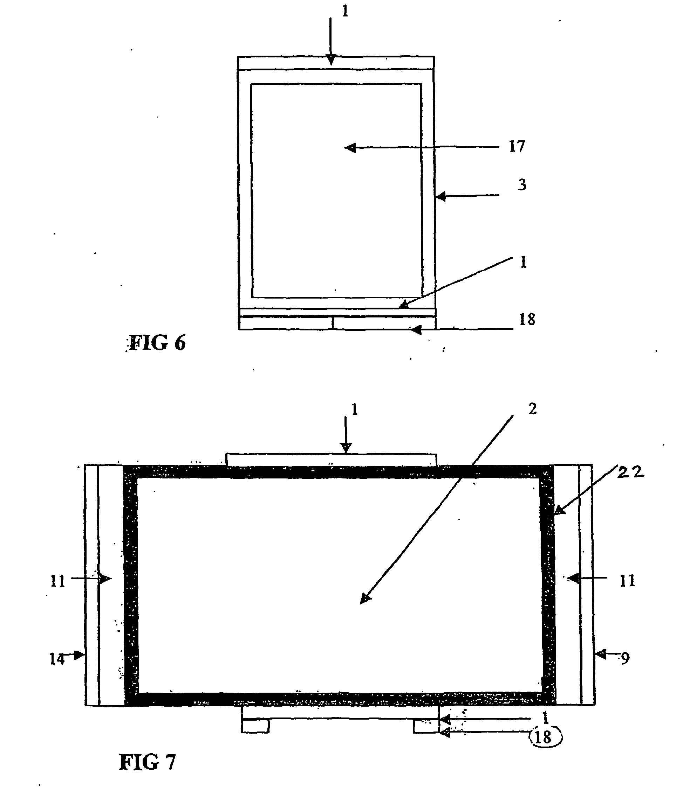

- la figure 6, une vue de face du dispositif en position fermée,
- la figure 7, une vue de face du dispositif en position ouverte.

En référence aux figures annexées, le dispositif pour plier/déplier une toile de projection 2 selon la présente invention comporte un ornement décoratif mural 17 derrière lequel est fixé un coffret 1 rigide, par exemple réalisé en profilé rigide et léger d'aluminium. L'ornement décoratif 17 peut être choisi par l'utilisateur notamment parmi un cadre, un sous-verre, un tableau, un miroir ou un pêle-mêle aimanté, selon ses goûts, l'emplacement du dispositif (chambre, séjour, salle dédiée), la luminosité environnante, l'utilisation du dispositif dans sa position fermée, ou encore le mobilier placé à proximité afin de l'harmoniser avec ce dernier. A cet effet, diverses finitions de la partie visible du dispositif dans sa position fermée peuvent être proposées, par exemple une finition en aluminium et/ou en placage de bois.

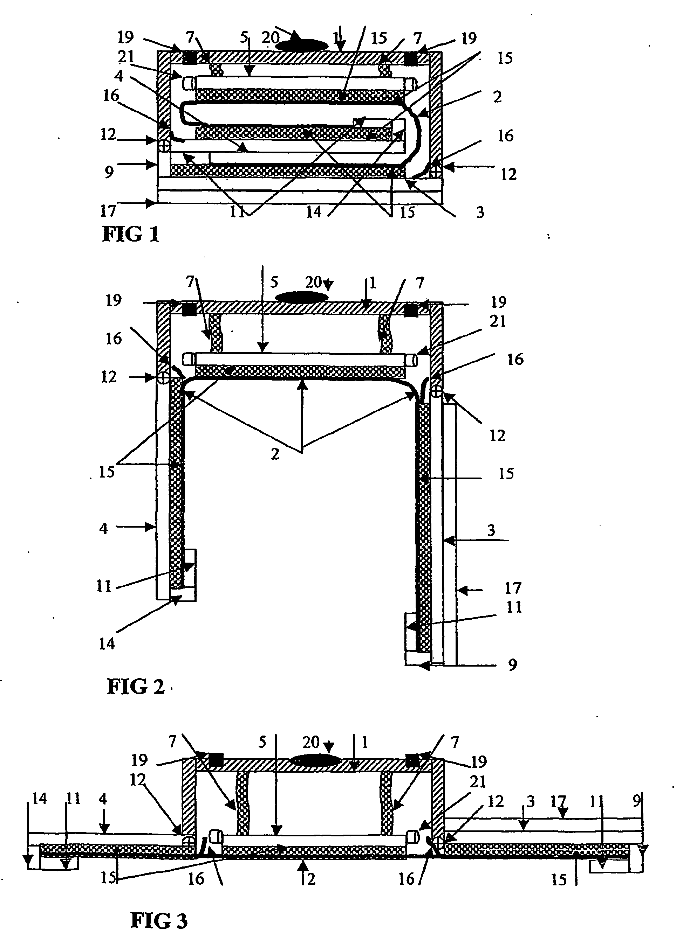

Le coffret 1 est pourvu d'un premier volet 3, dit volet droit, et d'un second volet 4, dit volet gauche, lesdits volets étant reliés au coffret par des charnières 12 alignées verticalement, typiquement trois charnières par volet. Le volet droit 3 constitue lui-même l'ornement mural 17, ou il le supporte à l'aide de tout moyen de fixation approprié. Comme cela est visible sur les figure 1, 4 et 4bis, les profondeurs différentes des côtés du coffret 1 sont telles que les deux volets en position fermé se referment l'un devant l'autre en laissant un espace libre entre eux, le volet gauche étant également moins large que le droit.

Des bras 10 articulés sont fixés entre chaque volet et le double fond du coffret 1 pour faciliter et assister leur ouverture et leur fermeture, comme illustré sur les figures 4, 4bis, 5 et 5bis. Typiquement, ces bras 10 sont situés au niveau de tranches supérieure et inférieure de chaque volet.

Le coffret 1 renferme, sensiblement en son centre, un double fond mobile 5 relié au coffret par un système de rappel élastique 7 tendant à ramener ce double fond 5 vers le fond du coffret 1 en le faisant coulisser de manière rectiligne d'avant en arrière, et inversement, au sein dudit coffret 1.

Dans le mode de réalisation représenté, le double fond 5 coulisse au sein du coffret à l'aide de roulettes 21 illustrée notamment de manière schématique sur la figure 1, collaborant par exemple avec des rails (non illustrés).

Le double fond 5 est également relié aux deux volets 3 et 4 à l'aide d'un système de câbles d'attaches 8 de sorte que l'ouverture des deux volets tire le double fond 5 vers l'avant au sein du coffret 1 jusqu'à ce que le double fond se tienne parfaitement dans l'alignement des deux volets ouverts, c'est-à-dire dans un même plan, comme illustré sur les figures 3, 5 et 5bis. Cette cinématique permet ainsi une avancée automatique du double fond 5 lors de l'ouverture des volets.

Les deux volets 3 et 4 comportent chacun un système d'accroche aimanté 13 permettant de les maintenir ouverts pendant l'utilisation du dispositif afin de conserver la planéité de l'ensemble constitué par les volets et le double fond 5.

Le coffret 1 comporte par ailleurs un rebord 9 vertical situé à l'extrémité intérieure du volet droit 3 permettant de clore latéralement le coffret 1 en position fermé, ce qui en améliore l'esthétique et évite l'arrivée de poussière pouvant s'accrocher à la toile ou gêner la fermeture et l'ouverture des volets.

Par soucis de symétrie et d'esthétique, surtout lorsque le dispositif est totalement ouvert, un rebord identique 14 vertical équipe également l'extrémité intérieure du volet gauche 4.

Le rebord 9, ou l'extrémité du volet droit 3 lui-même, comporte un autre système aimanté d'accroche coopérant avec le système d'accroche 13 afin de maintenir le coffret en position fermé lorsqu'il n'est pas utilisé.

Les deux volets 3 et 4 comportent chacun un dispositif latéral de protection, sous forme de cache en tissu 16, pour recouvrir les charnières 12 et éviter toute usure par frottement d'autres parties du dispositif, notamment la toile de projection réflective 2, lors des opérations répétées d'ouverture et de fermeture des volets 3 et 4.

Les deux volets 3 et 4 ainsi que le double fond central 5 sont munis respectivement de baguettes 15 de différentes épaisseurs pour rattraper si nécessaire leur alignement en profondeur, et éloigner la toile réflective des charnières 12 des deux volets. Ces baguettes 15, ou directement les deux volets 3 et 4 et le double fond central 5, sont garnis ou comprennent un système d'accroche permettant de suspendre et de tendre la toile de projection réflective 2.

De préférence, les angles intérieurs des deux volets 3 et 4 sont chanfreinés pour ne pas endommager la toile de projection frontale 2 par frottement à leur contact.

La toile de projection réflective 2 est positionnée au sein du coffret 1 de telle sorte qu'elle soit tendue localement sur le volet droit 3, sur le volet gauche 4 et sur le double fond 5 à l'aide d'un système de tension élastique 6 ou d'un galon s'étendant sur le périmètre de cette toile et servant à la tendre lorsque le dispositif est ouvert. Ce système de tension élastique 6 est de préférence caché aux yeux de l'utilisateur par deux caches 11 situés respectivement à l'extrémité des volets droit 3 et gauche 4.

La toile de projection frontale 2 est renforcée sur son périmètre par des bandes 18 de couleur contrastée par rapport à celle de la toile, par exemple des bandes noires en tissu tel que de la feutrine. Ces bandes forment ensemble un bandeau servant à la fois à renforcer localement la structure de la toile de projection 2, à accentuer le contraste de l'image en cours de projection sur la toile, et à améliorer le design d'ensemble du dispositif en position ouverte en dissimulant notamment des portions du dispositif de tension 6.

Avantageusement, le dispositif est monté sur un axe rotatif 20 arrière permettant à l'utilisateur de le pivoter pour le placer en position horizontale au mur pendant les moments de non utilisation, comme cela est illustré sur les figures 1 à 5bis. Cette solution permet par exemple d'intégrer un tableau au format paysage sur la face frontale su volet droit 3.

Le dispositif comprend également, à l'arrière du coffret 1, un système de fixation murale 19, constitué de crochets ou d'emplacements perforés permettant à l'utilisateur de le suspendre au mur tel un tableau, comme illustré sur les figures 1 à 5bis.

Le dispositif peut également comprendre un système de piétements amovibles 18 permettant à l'utilisateur de le positionner sur une table ou tout autre support horizontal de son choix pendant son utilisation après l'avoir décroché du mur, comme représenté sur la figure 7.

A titre d'exemple non limitatif, le dispositif une fois ouvert présente des dimensions telles que son rapport largeur sur hauteur est sensiblement égal à 16/9, c'est-à-dire le format le plus répandu en matière de projection home-cinéma. Ainsi, l'écran formé par la toile de projection réflective 2 tendue sur les volets et le double fond pourra présenter l'un des formats standard suivants :
- 210 cm de largeur sur 105 cm de hauteur. Dans ce format, le coffret 1 présente une largeur d'environ 72 cm, une hauteur de 105 cm et une épaisseur de 12 cm ; ou
- 240 cm de largeur sur 122 cm de hauteur. Dans ce format, le coffret 1 présente une largeur d'environ 83 cm, une hauteur de 122 cm et une épaisseur de 12 cm ; ou
- 280 cm de largeur sur 145 cm de hauteur. Dans ce format, le coffret 1 présente une largeur d'environ 147 cm, une hauteur de 145 cm et une épaisseur de 12 cm.

Ainsi, dans les dispositifs selon l'invention présentant de telles dimensions, la largeur du dispositif dans sa position repliée est sensiblement égale au tiers de la largeur totale de l'écran une fois la toile déployée et tendue sur les volets et le double fond. Le gain de place est donc particulièrement important, ce qui permet d'intégrer le dispositif selon de nombreuses configurations et dans des habitations manquant d'espace. Par ailleurs, en raison du déplacement automatisé du double fond asservi à l'ouverture et la fermeture des volets, et des espaces prévus respectivement entre le double fond et le second volet et entre les deux volets repliés, la toile 2 se replie sur elle-même sans qu'aucune marque persistante de pliure se forme sur celle-ci. Ceci constitue un avantage considérable par rapport à tous les systèmes existant actuellement.

Grâce au pliage des volets devant le double fond formant, en vue de dessus, une forme similaire à celle d'un trombone, l'épaisseur totale du dispositif de la présente invention est assez peu différente de celle d'un écran à plasma ou à cristaux liquides, ce type d'écran étant souvent accroché à un mur.

Le format du dispositif une fois plié, qui est assez proche de celui d'un poster standard ou d'un tableau, permet toutes sortes de mise en valeur du dispositif notamment par l'utilisation de reproductions d'oeuvres d'art glissées sous une façade en verre ou en plastique transparent, par l'ajout de placages latéraux de finition en bois précieux tel que de la ronce de noyer ou de la loupe d'orme, ou de bandeaux en métal, tel que de l'aluminium brossé ou poli.

Par ailleurs, contrairement aux dispositifs de l'art antérieur à écran enroulable, motorisé ou non, dont un des principaux défauts est la faible tension de la toile, qui diminue dans le temps, le dispositif conforme à la présente invention permet de maintenir une tension importe et constante de la toile de projection, garantissant ainsi des conditions idéales de projection.

Le dispositif selon l'invention est particulièrement destiné à équiper le domicile de particuliers désirant installer un système de projection home-cinéma privé discret et esthétique à base d'un vidéo-projecteur et d'une toile de projection réflective.

Il doit être bien entendu toutefois que la description détaillée, donnée uniquement à titre d'illustration de l'objet de l'invention, ne constitue en aucune manière une limitation.

Ainsi, les volets 3 et 4 peuvent être articulés sur le coffret 1 à l'aide de gonds ou de vis sans fin en remplacement des charnières 12 de sorte qu'ils se referment l'un devant l'autre en laissant un espace entre eux.

Le système de rappel élastique 7 du double fond 5 peut comprendre une série de ressorts reliant l'arrière du double fond au fond du coffret 1 afin de ramener automatiquement le double fond vers le fond du coffret lors de la fermeture des volets 3 et 4.

En remplacement des câbles 8, le double fond 5 peut être relié aux deux volets 3 et 4 du coffret 1 par un système d'attaches constitué par exemple de coulisseaux, de compas ou de bras articulés, de sorte que l'ouverture des deux volets par l'utilisateur fait avancer le double fond 5 jusqu'à ce qu'il se situe parfaitement dans le plan des deux volets.

Selon une autre variante particulièrement avantageuse, il est possible de remplacer les moyens de rappel élastique 7 reliant le double fond au fond du coffret 1 et le système d'attache 8 reliant les volets au double fond par un seul système constitué par de fines tôles souples élastiques, telles que des feuillards, reliant les volets au double fond.

En remplacement des roulettes 21, le double fond 5 peut coulisser au sein du coffret 1 à l'aide de rails, de glissières, de roulements à billes, de système élastique, ou de tout autre mécanisme.

Le système 6 de tension élastique de la toile sur chaque volet et sur le double fond peut être réalisé à l'aide d'oeillets et de cordes élastiques, ou encore de boutons pression.

Les bras 10 reliant le coffret 1 aux volets 3 et 4 peuvent être motorisés et télécommandables à distance pour une ouverture simplifiée. De même, l'axe rotatif 20 peut être motorisé et éventuellement commandé à distance pour faire pivoter le dispositif, et le piétement 18 peut être muni d'un moteur pour pouvoir régler la position en hauteur du dispositif afin de l'adapter à l'environnement et offrir un confort optimal de vision.

Par ailleurs, le bandeau 18 de protection et d'amélioration du contraste peut être constitué par un feuillard peint en noir placé non pas directement sur la toile, mais devant celle-ci, par exemple à l'aide de pattes de liaison fixées aux volets, au double fond ou au coffret.

Le dispositif tel qu'il est conçu peut être placé sur un mur en position dite dressée pour une ouverture horizontale du triptyque, c'est-à-dire avec les volets s'ouvrant vers la droite et vers la gauche, mais il peut également être placé en position dite couchée de telle sorte que les volets s'ouvrent vers le haut et vers le bas.

Le tableau dont il est question dans la présente demande fait aussi bien référence à un tableau d'art, tel qu'une toile de maître ou une reproduction, qu'à un tableau d'écriture, tel qu'un tableau vert pour salle de classe ou un tableau blanc pour salle de conférence ou amphithéâtre. Cette dernière solution permet ainsi une intégration du dispositif dans un environnement professionnel, par exemple dans une salle de réunion muni d'un vidéoprojecteur, le dispositif de la présente invention remplissant alors la double fonction de toile de projection dans son état déplié et de tableau d'écriture dans son état replié.

Une variante particulièrement intéressante du dispositif consiste à accrocher un écran d'affichage d'images sur la face avant du premier volet. De manière non limitative, cet écran pourra être de type analogique ou numérique, par exemple à plasma, à cristaux liquides (LCD), à technologie OLED (Organic Light Emitting Diode), ou à nanotubes de carbone (CNT), ou tout autre technologie d'affichage.

## Revendications

1. Dispositif de pliage d'une toile de projection réflective (2), comprenant un décor mural (17) derrière lequel est disposé un coffret (1) à l'intérieur duquel s'ouvre un dispositif en trois parties tel un triptyque comprenant un premier volet (3), un second volet (4) et un double fond central (5) s'avançant dans l'alignement desdits volets (3, 4) ouverts et/ou reculant au fond dudit coffret (1), une toile de projection réflective (2) étant tendue sur les volets (3, 4) et le double fond (5) de sorte que ladite toile (2) se déploie et se tend à l'ouverture des deux volets (3, 4), et se referme sur elle-même en trois parties, sans aucune marque de pliure, à la fermeture des deux volets (3, 4).

2. Dispositif selon la revendication 1, dans lequel le coffret (1) possède un premier côté sur lequel est fixé le premier volet (3), et un second côté sur lequel est fixé le second volet (4), le premier côté étant plus profond que le second côté.

3. Dispositif selon la revendication 1 ou la revendication 2, dans lequel le second volet (4) est moins large que le premier volet (3) de façon à pouvoir rentrer à l'intérieur du coffret (1) une fois fermé.

4. Dispositif selon l'une quelconque des revendications précédentes, dans lequel le premier volet (3) et le second volet (4) sont reliés au coffret (1) par des charnières (12) disposées de sorte que lesdits volets (3, 4) ne se referment pas sur un même plan mais l'un devant l'autre, en laissant un espace libre entre eux.

5. Dispositif selon l'une quelconque des revendications précédentes, **caractérisé qu'**il comprend en outre des moyens (10) pour faciliter l'ouverture et/ou la fermeture de l'un au moins des volets (3 ; 4).

6. Dispositif selon la revendication 5, dans lequel les moyens pour faciliter l'ouverture et/ou la fermeture des volets (3, 4) comprennent un bras articulé (10) reliant chacun des volets (3, 4) au coffret (1).

7. Dispositif selon l'une quelconque des revendications précédentes, dans lequel les volets (3, 4) et le double fond (5) sont chacun munis de moyens (15) de rattrapage de leur alignement afin de tendre la toile de projection réflective (2) de manière parfaitement plane sur lesdits volets (3, 4) et ledit double fond (5) lorsque le dispositif est en position totalement ouverte.

8. Dispositif selon la revendication 7, dans lequel les moyens (15) de rattrapage d'alignement comprennent des baguettes d'épaisseurs variables (15) disposés sur le périmètre respectif de chaque volet (3, 4) et/ou dudit double fond (5).

9. Dispositif selon la revendication 8, dans lequel les volets (3, 4) et le double fond central (5), ou leurs baguettes de rattrapage d'alignement (15), sont munis de points d'accroche pour tendre la toile de projection frontale (2).

10. Dispositif selon l'une quelconque des revendications précédentes, **caractérisé en ce qu'**il comprend en outre un système de rappel élastique (7) de sorte que le double fond central (5), sur lequel est tendu le centre de la toile de projection réflective (2), avance automatiquement à l'ouverture des volets (3, 4) et recule à leur fermeture, un espace libre étant prévu entre le double fond central (5) et le second volet (4) placé devant lui.

11. Dispositif selon la revendication 10, dans lequel le système de rappel élastique (7) est constitué par une pluralité de ressorts reliant le double fond central (5) au coffret (1).

12. Dispositif selon l'une quelconque des revendications précédentes, dans lequel un système d'attache (8) relie les volets (3, 4) au double fond (1) de manière à déplacer automatiquement le double fond (1) en fonction de l'ouverture et la fermeture des volets (3, 4).

13. Dispositif selon la revendication 12, dans lequel le système d'attache (8) comprend un câble.

14. Dispositif selon la revendication 12, dans lequel le système d'attache (8) comprend une fine tôle souple élastique.

15. Dispositif selon revendication 14, dans lequel les moyens de rappel élastiques (7) et les moyens d'attache (8) sont constitués par ladite tôle.

16. Dispositif selon l'une quelconque des revendications précédentes, dans lequel le double fond central (5) est muni de roulettes (21) pour faciliter son avance et son recul à l'intérieur du coffret (1) à l'ouverture et la fermeture des volets (3, 4).

17. Dispositif selon l'une quelconque des revendications précédentes, **caractérisé en ce qu'**il comprend également un système d'accroche (13) pour bloquer chaque volet (3, 4) en position ouverte et/ou fermée.

18. Dispositif selon la revendication 17, dans lequel le système d'accroche (13) comprend un aimant équipant un bord de chaque volet (3, 4) et des bords correspondants du coffret (1).

19. Dispositif selon l'une quelconque des revendications précédentes, dans lequel le premier volet (3) est muni d'un premier rebord (9) de sorte que le périmètre de l'ensemble du coffret (1) est parfaitement clos quand le dispositif est fermé.

20. Dispositif selon la revendication 19, dans lequel le second volet (4) est également muni d'un rebord (14) sensiblement identique au rebord (9) du premier volet (3).

21. Dispositif selon l'une quelconque des revendications précédentes, **caractérisé en ce qu'**il comprend en outre un système de tension élastique (6) fixé à la toile de projection réflective (2), de sorte que ladite toile (2) est tendue localement au sein du coffret (1) sur chaque volet (3, 4) et sur le double fond central (5).

22. Dispositif selon la revendication 21 et la revendication 19 ou 20, **caractérisé en ce qu'**il comprend également des caches (11) fixés à l'extrémité intérieure de chaque volet (3, 4) et juxtaposés sur les rebords (9) et (14) des volets (3, 4) de sorte que ces caches (11) masquent le dispositif de tension (6) de la toile de projection réflective (2) lorsque le dispositif est ouvert.

23. Dispositif selon l'une quelconque des revendications précédentes, dans lequel les angles intérieurs des volets (3, 4) sont chanfreinés et recouverts d'un système de protection (16), par exemple en tissu, de manière à protéger la toile de projection réflective (2) de toute usure, notamment par frottement.

24. Dispositif selon l'une quelconque des revendications précédentes, **caractérisé en ce qu'**il comprend en outre un bandeau périmétrique (22) de couleur contrastée avec celle de la toile de projection (2), ledit bandeau (22) étant fixé sur le recto de la toile réflective (2) de façon à renforcer localement la structure de la toile (2), à accentuer le contraste de l'image projetée sur la toile (2) et à dissimuler des portions du dispositif de tension (6).

25. Dispositif selon l'une quelconque des revendications précédentes, dans lequel un élément d'ornement (17) comprenant l'un au moins parmi un cadre, un sous-verre, un tableau, un miroir ou un pêle-mêle aimanté, est fixé sur ou constitue la face avant du premier volet (3) de sorte que ce dispositif d'ornement (17) constitue, ou est supporté par, la façade décorative de l'ensemble du dispositif en position fermé.

26. Dispositif selon l'une quelconque des revendications 1 à 24, **caractérisé en ce qu'**un écran d'affichage d'images est supporté sur la face avant du premier volet (3).

27. Dispositif selon l'une quelconque des revendications précédentes, dans lequel l'arrière du coffret (1) est muni d'un système d'accroche (19) permettant de le suspendre à un mur tel un tableau mural.

28. Dispositif selon l'une quelconque des revendications précédentes, dans lequel le coffret est muni, à sa base, d'un système de piètements amovibles (18) permettant de poser l'ensemble du dispositif sur une table ou un support horizontal.

29. Dispositif selon l'une quelconque des revendications précédentes, dans lequel le coffret (1) est muni d'un axe rotatif (20) arrière placé sensiblement en son centre permettant de suspendre ledit dispositif à un mur et de le placer en position horizontale, en position verticale, ou dans toute position intermédiaire inclinée par rotation du coffret (1) autour dudit axe.

30. Dispositif selon la revendication 28 ou 29, dans lequel le piétement et/ou l'axe rotatif est(sont) motorisé(s).

## Claims

1. A device for folding a reflective projection sheet (2), comprising a wall decoration (17) having a box (1) placed behind it, a device inside the box opening out to form a three-portion device such as a triptych comprising a first panel (3), a second panel (4), and a central false back (5) that advances into alignment with said panels (3, 4) when open and/or that reverses to the back of said box (1), a reflective projection sheet (2) being tensioned over the panels (3, 4) and the false back (5) so that said sheet (2) deploys and is tensioned when the two panels (3, 4) are open, and folds over into three portions without leaving any fold marks when the two panels (3, 4) are closed.

2. A device according to claim 1, in which the box (1) possesses a first side on which the first panel (3) is secured, and a second side on which the second panel (4) is secured, the first side being deeper than the second side.

3. A device according to claim 1 or claim 2, in which the second panel (4) is narrower than the first panel (3) so as to be capable of entering inside the box (1) when closed.

4. A device according to any preceding claim, in which the first panel (3) and the second panel (4) are connected to the box (1) via hinges (12) spaced in such a manner that said panels (3, 4) do not close in a common plane but rather one in front of the other, leaving an empty space between them.

5. A device according to any preceding claim, **characterized in that** it further comprises means (10) for facilitating opening and/or closing of at least one of the panels (3; 4).

6. A device according to claim 5, in which the means for facilitating opening and/or closing of the panels (3, 4) comprise a hinged arm (10) connecting each of the panels (3, 4) to the box (1).

7. A device according to any preceding claim, in which the panels (3, 4) and the false back (5) are each provided with means (15) for correcting their alignment so as to tension the reflective projection sheet (2) in perfectly plane manner on said panels (3, 4) and on said false back (5) when the device is in the fully-open position.

8. A device according to claim 7, in which the alignment correcting means (15) comprise battens of various thicknesses (15) placed on the respective perimeters of each panel (3, 4) and/or of said false back (5).

9. A device according to claim 8, in which the panels (3, 4) and the central false back (5), or their alignment-correcting battens (15) are provided with fastening points for tensioning the front projection sheet (2).

10. A device according to any preceding claim, **characterized in that** it further comprises a resilient return system (7) such that the central false back (5) over which the middle of the reflective projection sheet (2) is tensioned advances automatically when the panels (3, 4) are open and reverses when they are closed, an empty space being provided between the central false back (5) and the second panel (4) placed in front of it.

11. A device according to claim 10, in which the resilient return system (7) is made up of a plurality of springs connecting the central false back (5) to the box (1).

12. A device according to any preceding claim, in which a fastener system (8) connects the panels (3, 4) to the false back (1) in such a manner as to move the false back (1) automatically as a function of the opening and the closing of the panels (3, 4).

13. A device according to claim 12, in which the fastener system (8) comprises a cable.

14. A device according to claim 12, in which the fastener system (8) comprises a fine flexible resilient metal sheet.

15. A device according to claim 14, in which the resilient return means and the attachment means are constituted by said sheet.

16. A device according to any preceding claim, in which the central false back (5) is provided with wheels (21) to facilitate advancing and reversing inside the box (1) when the panels (3, 4) are opened and closed.

17. A device according to any preceding claim, **characterized in that** it also includes a fastener system (13) for holding each panel (3, 4) in the open position and/or the closed position.

18. A device according to claim 17, in which the fastener system (13) comprises magnets fitted to one edge of each panel (3, 4) and to the corresponding edges of the box (1).

19. A device according to any preceding claim, in which the first panel (3) is provided with a first rim (9) such that the perimeter of the box (1) as a whole is fully closed when the device is closed.

20. A device according to claim 19, in which the second panel (4) is also provided with a rim (14) substantially identical to the rim (9) of the first panel (3).

21. A device according to any preceding claim, **characterized in that** it further includes a resilient tensioning system (6) secured to the reflective projection sheet (2) so that said sheet (2) is tensioned locally within the box (1) on each panel (3, 4) and on the central false back (5).

22. A device according to claim 21 and claim 19 or claim 20, **characterized in that** it also includes covers (11) fastened to the inside end of each of the panels (3, 4) and juxtaposed on the rims (9 and 14) of the panels (3, 4) so that the covers (11) mask the tensioning system (6) for the reflecting projection sheet (2) when the device is open.

23. A device according to any preceding claim, in which the inside corners of the panels (3, 4) are chamfered and covered by a protective system (16), e.g. of cloth, so as to protect the reflective projection sheet (2) from any wear, in particular by rubbing.

24. A device according to any preceding claim, **characterized in that** it further comprises a peripheral band (22) of color that contrasts with the color of the projection sheet (2), said band (22) being secured to the front face of the reflective sheet (2) so as to locally reinforce the structure of the sheet (2), to accentuate the contrast of the image projected on the sheet (2), and to hide portions of the tensioning system (6).

25. A device according to any preceding claim, in which an ornamental element (17) comprising at least one of the following: a frame, a poster cover, a picture, a mirror, or a board, e.g. a magnetized board, is fastened on or constitutes the front face of the first panel (3) so that this ornamental device (17) constitutes or is supported by the decorative facade of the device as a whole when in the closed position.

26. A device according to any one of claims 1 to 24, **characterized in that** an image display screen is supported on the front face of the first panel (3).

27. A device according to any preceding claim, in which the rear of the box (1) is provided with a fixing system (19) enabling it to be suspended from a wall like a picture.

28. A device according to any preceding claim, in which the box is provided at its base with a removable stand system (18) enabling the entire device to be placed on a table or a horizontal support.

29. A device according to any preceding claim, in which the box (1) is provided with a rear rotary shaft (20) placed substantially in its middle and enabling said device to be hung from a wall and to be placed in a horizontal position, in a vertical position, or in any intermediate inclined position by turning the box (1) about said shaft.

30. A device according to claim 28 or claim 29, in which the stand and/or the rotary shaft is/are motor-driven.

## Patentansprüche

1. Vorrichtung zum Falten einer reflektierenden Projektionsleinwand (2), die eine Wanddekoration (17) enthält, hinter der ein Kasten (1) angeordnet ist, in dessen Innerem sich eine dreiteilige Vorrichtung wie ein Triptychon öffnet, die eine erste Klappe (3), eine zweite Klappe (4) und einen zentralen Doppelboden (5) enthält, der sich in die fluchtende Ausrichtung mit den offenen Klappen (3, 4) vorschiebt und/oder zum Boden des Kastens (1) zurückweicht, wobei eine reflektierende Projektionsleinwand (2) derart über die Klappen (3, 4) und den Doppelboden (5) gespannt ist, dass die Leinwand (2) sich beim Öffnen der zwei Klappen (3, 4) entfaltet und spannt und beim Schließen der zwei Klappen (3, 4) ohne jede Falzmarkierung in drei Teilen auf sich selbst schließt.

2. Vorrichtung nach Anspruch 1, bei der der Kasten (1) eine erste Seite, an der die erste Klappe (3) befestigt ist, und eine zweite Seite besitzt, an der die zweite Klappe (4) befestigt ist, wobei die erste Seite tiefer ist als die zweite Seite.

3. Vorrichtung nach Anspruch 1 oder 2, bei der die zweite Klappe (4) weniger breit ist als die erste Klappe (3), um ins Innere des Kastens (1) passen zu können, wenn er geschlossen ist.

4. Vorrichtung nach einem der vorhergehenden Ansprüche, bei der die erste Klappe (3) und die zweite Klappe (4) mit dem Kasten (1) durch Scharniere (12) verbunden sind, die so angeordnet sind, dass die Klappen (3, 4) nicht in der gleichen Ebene, sondern die eine vor der anderen schließen, indem sie einen Freiraum zwischen sich lassen.

5. Vorrichtung nach einem der vorhergehenden Ansprüche, **dadurch gekennzeichnet, dass** sie außerdem Einrichtungen (10) enthält, um das Öffnen und/oder Schließen mindestens einer der Klappen (3; 4) zu erleichtern.

6. Vorrichtung nach Anspruch 5, bei der die Einrichtungen zum Erleichtern des Öffnens und/oder Schließens der Klappen (3, 4) einen angelenkten Arm (10) enthalten, der jede der Klappen (3, 4) mit dem Kasten (1) verbindet.

7. Vorrichtung nach einem der vorhergehenden Ansprüche, bei der die Klappen (3, 4) und der Doppelboden (5) je mit Einrichtungen (15) zum Nachstellen ihrer Ausrichtung versehen sind, um die reflektierende Projektionsleinwand (2) perfekt eben auf den Klappen (3, 4) und dem Doppelboden (5) zu spannen, wenn die Vorrichtung in der vollständig offenen Stellung ist.

8. Vorrichtung nach Anspruch 7, bei der die Ausrichtungsnachstelleinrichtungen (15) Stäbe unterschiedlicher Dicken (15) enthalten, die auf dem Umfang jeder Klappe (3, 4) und/oder des Doppelbodens (5) angeordnet sind.

9. Vorrichtung nach Anspruch 8, bei der die Klappen (3, 4) und der zentrale Doppelboden (5) oder ihre Ausrichtungsnachstellstäbe (15) mit Fixierpunkten versehen sind, um die frontale Projektionsleinwand (2) zu spannen.

10. Vorrichtung nach einem der vorhergehenden Ansprüche, **dadurch gekennzeichnet, dass** sie außerdem ein elastisches Rückstellsystem (7) enthält, damit der zentrale Doppelboden (5), auf dem die Mitte der reflektierenden Projektionsleinwand (2) gespannt ist, automatisch beim Öffnen der Klappen (3, 4) vorrückt und sich bei ihrem Schließen zurückzieht, wobei ein Freiraum zwischen dem zentralen Doppelboden (5) und der vor ihm angeordneten zweiten Klappe (4) vorgesehen ist.

11. Vorrichtung nach Anspruch 10, bei der das elastische Rückstellsystem (7) aus mehreren Federn besteht, die den zentralen Doppelboden (5) mit dem Kasten (1) verbinden.

12. Vorrichtung nach einem der vorhergehenden Ansprüche, bei der ein Befestigungssystem (8) die Klappen (3, 4) so mit dem Doppelboden (1) verbindet, dass der Doppelboden (1) abhängig vom Öffnen und Schließen der Klappen (3, 4) automatisch verschoben wird.

13. Vorrichtung nach Anspruch 12, bei der das Befestigungssystem (8) ein Kabel enthält.

14. Vorrichtung nach Anspruch 12, bei der das Befestigungssystem (8) ein dünnes elastisches Federblech enthält.

15. Vorrichtung nach Anspruch 14, bei der die elastischen Rückstelleinrichtungen (7) und die Befestigungseinrichtungen (8) aus dem Blech bestehen.

16. Vorrichtung nach einem der vorhergehenden Ansprüche, bei der der zentrale Doppelboden (5) mit Rädchen (21) versehen ist, um sein Vorrücken und Zurückziehen ins Innere des Kastens (1) beim Öffnen und Schließen der Klappen (3, 4) zu erleichtern.

17. Vorrichtung nach einem der vorhergehenden Ansprüche, **dadurch gekennzeichnet, dass** sie ebenfalls ein Fixiersystem (13) enthält, um jede Klappe (3, 4) in der offenen/geschlossenen Stellung zu blockieren.

18. Vorrichtung nach Anspruch 17, bei der das Fixiersystem (13) einen Magnet enthält, der einen Rand jeder Klappe (3,4) und entsprechende Ränder des Kastens (1) ausstattet.

19. Vorrichtung nach einem der vorhergehenden Ansprüche, bei der die erste Klappe (3) mit einer ersten Randleiste (9) versehen ist, so dass der Umfang der Gesamtheit des Kastens (1) perfekt geschlossen ist, wenn die Vorrichtung verschlossen wird.

20. Vorrichtung nach Anspruch 19, bei der die zweite Klappe (4) ebenfalls mit einer Randleiste (14) im Wesentlichen gleich der Randleiste (9) der ersten Klappe (3) versehen ist.

21. Vorrichtung nach einem der vorhergehenden Ansprüche, **dadurch gekennzeichnet, dass** sie außerdem ein elastisches Spannsystem (6) enthält, das an der reflektierenden Projektionsleinwand (2) befestigt ist, so dass die Leinwand (2) lokal innerhalb des Kastens (1) auf jeder Klappe (3, 4) und auf dem zentralen Doppelboden (5) gespannt wird.

22. Vorrichtung nach Anspruch 21 und Anspruch 19 oder 20, **dadurch gekennzeichnet, dass** sie ebenfalls Abdeckungen (11) enthält, die am inneren Ende jeder Klappe (3, 4) befestigt und auf den Randleisten (9) und (14) der Klappen (3, 4) nebeneinander angeordnet sind, so dass diese Abdeckungen (11) die Spannvorrichtung (6) der reflektierenden Projektionsleinwand (2) verdecken, wenn die Vorrichtung offen ist.

23. Vorrichtung nach einem der vorhergehenden Ansprüche, bei der die Innenwinkel der Klappen (3, 4) abgeschrägt und von einem Schutzsystem (16), zum Beispiel aus Stoff, bedeckt sind, um die reflektierende Projektionsleinwand (2) vor jeder Abnutzung, insbesondere durch Reibung, zu schützen.

24. Vorrichtung nach einem der vorhergehenden Ansprüche, **dadurch gekennzeichnet, dass** sie außerdem einen Umfangsstreifen (22) in Kontrastfarbe zu derjenigen der Projektionsleinwand (2) enthält, wobei der Streifen (22) an der Vorderseite der reflektierenden Leinwand (2) so befestigt ist, dass er die Struktur der Leinwand (2) lokal verstärkt, den Kontrast des auf die Leinwand (2) projizierten Bilds betont und Abschnitte der Spannvorrichtung (6) verdeckt.

25. Vorrichtung nach einem der vorhergehenden Ansprüche, bei der ein Zierelement (17), das mindestens einen Rahmen, einen Glasrahmen, ein Bild, einen Spiegel oder einen magnetisierten Multirahmen enthält, an der Vorderseite der ersten Klappe (3) befestigt ist oder diese bildet, so dass diese Ziervorrichtung (17) die dekorative Fassade der Gesamtheit der Vorrichtung in der geschlossenen Stellung bildet oder von ihr getragen wird.

26. Vorrichtung nach einem der Ansprüche 1 bis 24, **dadurch gekennzeichnet, dass** ein Bildanzeigeschirm an der Vorderseite der ersten Klappe (3) getragen wird.

27. Vorrichtung nach einem der vorhergehenden Ansprüche, bei der die Rückseite des Kastens (1) mit einem Fixiersystem (19) versehen ist, das es
ermöglicht, ihn an einer Wand nach Art eines Wandbilds aufzuhängen.

28. Vorrichtung nach einem der vorhergehenden Ansprüche, bei der der Kasten an seiner Basis mit einem System von entfernbaren Fußgestellen (18) versehen ist, die es ermöglichen, die Gesamtheit der Vorrichtung auf einem Tisch oder einem waagrechten Träger anzuordnen.

29. Vorrichtung nach einem der vorhergehenden Ansprüche, bei der der Kasten (1) mit einer hinteren Drehachse (20) versehen ist, die im Wesentlichen in seiner Mitte angeordnet ist und es ermöglicht, die Vorrichtung an einer Wand aufzuhängen und sie in waagrechter Stellung, in senkrechter Stellung oder in jeder geneigten Zwischenstellung durch Drehen des Kastens (1) um die Achse anzuordnen.

30. Vorrichtung nach Anspruch 28 oder 29, bei der das Fußgestell und/oder die Drehachse motorisiert ist (sind).
